# EUROPÄISCHE PATENTSCHRIFT

(11) **EP 1 189 996 B1**
(45) Veröffentlichungstag und Bekanntmachung des Hinweises auf die Patenterteilung: **11.12.2002**
(21) Anmeldenummer: 00926886.3
(22) Anmeldetag: 12.04.2000
(51) Int. Cl.: C09D 5/00, C09D 7/00

(54) **VERGILBUNGSARME WÄSSRIGE PULVERKLARLACK-DISPERSIONEN UND IHRE VERWENDUNG**
LOW-YELLOWING AQUEOUS CLEAR POWDER COATING DISPERSIONS AND THEIR USE
DISPERSIONS AQUEUSES DE VERNIS TRANSPARENT EN POUDRE A FAIBLE JAUNISSEMENT ET LEUR UTILISATION

(30) Priorität: 03.05.1999 DE 19920141
(43) Veröffentlichungstag der Anmeldung: 27.03.2002
(73) Patentinhaber: BASF Coatings Aktiengesellschaft, 48165 Münster (DE)
(72) Erfinder: OTT, Günther, D-48167 Münster (DE); WOLTERING, Joachim, D-41859 Münster (DE); STÜBBE, Wilfried, D-48268 Greven (DE); RÖCKRATH, Ulrike, D-48308 Senden (DE); BENDIX, Maximilian, D-59302 Oelde (DE); KALCK, Ulrich, D-67141 Neuhofen (DE); BERG, Jan, D-48165 Münster (DE); SAPPER, Götz-Ekkehard, D-97222 Rimpar (DE)
(74) Vertreter: Fitzner, Uwe, Dr.
(86) Internationale Anmeldenummer: EP0003276
(87) Internationale Veröffentlichungsnummer: WO00066666

(56) Entgegenhaltungen:
- EP-A- 0 062 138
- DE-A- 2 440 740
- DATABASE WPI Section Ch, Week 197430 Derwent Publications Ltd., London, GB; Class A11, AN 1974-54403V XP002901220 & JP 49 012184 A (UNITIKA LTD), 2. Februar 1974 (1974-02-02)

## Beschreibung

Die vorliegende Erfindung betrifft ein Verfahren zur Verhinderung der Vergilbung von mit Hilfe von Pulverlack-Dispersionen, insbesondere Pulverklarlack-Slurries, hergestellten ein- oder mehrschichtigen Lackierungen.

Pulverklarlacke sowie wäßrige Pulverklarlack-Dispersionen liegen bei Automobilbeschichtungen im Trend und verdrängen aufgrund ihrer Umweltfreundlichkeit die bislang in der Endbeschichtung eingesetzten lösemittelhaltigen Einkomponenten-Klarlacke auf Basis von Melaminharzen sowie auch die ebenfalls lösemittelbasierten Zweikomponenten-Klarlacke aus Polyacrylatharzen mit Polyisocyanaten als Vernetzern.
Wäßrige Pulverklarlack-Dispersionen, die von der Fachwelt auch als Pulverklarlack-Slurries bezeichnet werden, haben gegenüber den Pulverklarlacken den Vorteil, daß sie mit konventioneller Flüssiglack-Technologie verarbeitbar sind. Weiterhin sind sie in geringerer Schichtdicke applizierbar und tragen auf diese Weise zur Ressourcenschonung bei. Derartige Verfahren sind Stand der Technik. Beispielsweise beschreibt die US-Patentschrift 4,268,542 ein Verfahren, bei dem eine Mehrschichtlackierung aus zwei oder mehr Lackschichten auf ein Substrat aufgebracht wird. Die Oberfläche des Substrats wird zunächst teilweise oder vollständig mit einem Pulverlack überzogen. Anschließend wird eine Pulverlack-Dispersion, bestehend aus in wäßrigem Medium dispergierten Kunstharz-Partikeln, aufgetragen und das so behandelte Substrat in einem einzigen Schritt durch Wärmeeinwirkung getrocknet.

Aus der DE 196 13 547 ist eine wässrige Pulverklarlack-Dispersion bekannt, die durch die Verwendung von Epoxy-Carboxy-Systemen eine Vernetzung bei Temperaturen unterhalb von 160°C erlaubt. Dieses System zeigt allerdings eine stärkere Neigung zur Vergilbung im Vergleich zu den konventionellen Klarlacken auf Melaminharz- oder Polyisocyanatbasis.

Die deutschen Patentanmeldungen 197 41 555.5 und 197 44 561.6 beschreiben einen Pulverklarlack, bei dem ein glycidylgruppenhaltiges Polymerisat mit Tris(alkoxycarbonylamino)triazin und Polycarbonsäuren und/oder carboxyfunktionellen Polyestern vernetzt wird. Dieser Pulverklarlack kann ebenfalls als wäßriger Pulverklarlack formuliert werden, der gegenüber dem bisherigen Stand der Technik Vorteile in der Anätzbarkeit durch Umweltchemikalien sowie auch eine Verbesserung in der Vergilbung aufweist. Die Vergilbungsresistenz ist allerdings insbesondere bei der Klarlackierung von weißen Farbtönen noch kritisch und bedarf bei der Produktion einer besonderen Sorgfalt. Bei der Auswahl der hierfür eingesetzten Rohstoffe und Zwischenprodukte ist auf eine besonders hohe Reinheit und sehr geringe Eigenvergilbung zu achten, was von Nachteil ist. Insbesondere bei der Herstellung von Pulverlack-Dispersionen im Produktionstechnikum in Ansatzgrößen, die den Labormaßstab überschreiten, kann es gelegentlich vorkommen, daß derartige Chargen sich nach Applikation auf weißer Vorbeschichtung als besonders kritisch hinsichtlich der Vergilbung erweisen.

Der vorliegenden Erfindung lag daher die Aufgabe zugrunde, ein Verfahren zur Herstellung von ein- oder mehrschichtigen Lackierungen unter Verwendung von Pulverklarlack-Slurries zur Verfügung zu stellen, das die Nachteile des Standes der Technik nicht mehr länger aufweist, sondern Lackierungen liefert, die insbesondere keine Vergilbung mehr zeigen, ohne daß die sonstigen positiven Eigenschaften dieser Lackierungen beeinträchtigt werden.

Gefunden wurde demgemäß ein Verfahren zur Herstellung von ein- oder mehrschichtigen Klarlackbeschichtungen auf grundierten oder ungrundierten Substraten mittels Applikation mindestens einer Pulverlack-Dispersion, insbesondere einer Pulverklarlack-Slurry, auf dem Substrat und anschließender thermischer Härtung und/oder Härtung mit aktinischer Strahlung der resultierenden Schicht(en), wobei mindestens einer Pulverlack-Dispersion, insbesondere einer Pulverklarlack-Slurry, mindestens eine polyvalente anorganische Säure und/oder Oxalsäure zugesetzt wird oder werden.

Im folgenden wird das neue Verfahren als erfindungsgemäßes Verfahren bezeichnet.

Die vorliegende Erfindung betrifft ferner Pulverklarlack-Slurries, denen mindestens eine polyvalente Säure und/oder Oxalsäure zugesetzt wurde oder wurden sowie die durch Applikation dieser Pulverlack-Dispersionen, insbesondere Pulverklarlack-Slurries, hergestellten ein- oder mehrschichtigen Klarlackbeschichtungen und beschichtete Artikel.

In einer Variante des erfindungsgemäßen Verfahrens werden die polyvalenten Säuren und / oder die Oxalsäure auch der Wasserbasislack-Dispersion zugegeben, was zu einer weiteren Unterdrückung der Vergilbung führt.

Die neuen Pulverlack-Dispersionen bzw. Pulverklarlack-Slurries werden im folgenden als erfindungsgemäße Pulverklarlack-Slurries und die neuen ein- oder mehrschichtigen Pulverklarlack-Beschichtungen als erfindungsgemäße Beschichtungen bezeichnet.
Im Hinblick auf den Stand der Technik war es überraschend und für den Fachmann nicht vorhersehbar, daß durch das erfindungsgemäße Verfahren die erfindungsgemäßen Pulverklarlack-Slurries und die erfindungsgemäßen Beschichtungen die Nachteile des Standes der Technik nicht mehr länger aufweisen würden, ohne daß ihre sonstigen positiven Eigenschaften beinträchtigt werden.

Weiterhin besteht ein Vorteil der vorliegenden Erfindung darin, daß durch das Fehlen farbverfälschender Gelbtöne in der erfindungsgemäßen Beschichtung eine bessere Reproduzierbarkeit des Farbtons der farbgebenden Lackschicht resultiert.

Der wesentliche Bestandteil der erfindungsgemäßen Pulverklarlack-Slurry ist mindestens eine polyvalente anorganische Säure und/oder Oxalsäure.

Als polyvalente Säuren können bevorzugt Phosphorsäure und ihre Derivate, Schwefelsäure und ihre Derivate und Borsäure, besonders bevorzugt Phosphorsäure und ihre Derivate, ganz besonders bevorzugt Phosphorsäure, eingesetzt werden. Anstelle dieser Säuren oder zusätzlich hierzu kann Oxalsäure verwendet werden.

Die Säuren werden im Rahmen des erfindungsgemäßen Verfahrens den erfindungsgemäßen Pulverklarlack-Slurries in wirksamen Mengen zugesetzt. Unter "wirksamen Mengen" sind hierbei Mengen zu verstehen, die einerseits die Vergilbung zuverlässig verhindern, ohne die Pulverklarlack-Slurry zu destabilisieren und/oder das anwendungstechnische Anwendungsprofil der Lackierungen zu schädigen. Der Fachmann kann daher die geeigneten Mengen anhand einfacher Vorversuche ermitteln.

Von Vorteil sind insbesondere Mengen von 0,1 bis 2000 ppm, vorzugsweise 1 bis 1500 ppm, besonders bevorzugt 100 bis 1200 ppm und insbesondere 800 bis 1100 ppm, jeweils bezogen auf die Gesamtmenge der erfindungsgemäßen Pulverklarlack-Slurry. Sie werden deshalb bevorzugt angewandt.

Erfindungsgemäß werden die Säuren den Ausgangsprodukten oder den Zwischenprodukten bei jedem Verfahrensschritt der Herstellung der erfindungsgemäßen Pulverklarlack-Slurry oder der fertigen erfindungsgemäßen Pulverklarlack-Slurry zugesetz, wobei die letztgenannte Variante von Vorteil ist und daher bevorzugt angewandt wird.

Zur Herstellung der erfindungsgemäßen Beschichtungen wird die erfindungsgemäße Pulverklarlack-Slurry gemäß dem erfindungsgemäßen Verfahren auf das zu beschichtende grundierte oder ungrundierte Substrat appliziert. Methodisch gesehen weist die Applikation keine Besonderheiten auf, sondern erfolgt mit Hilfe der üblichen und bekannten Methoden wie Spritzen, Rakeln, Streichen, Tauchen, Gießen oder Walzen, insbesondere aber Spritzen. Das erfindungsgemäße Verfahren geht aus von dem zu beschichtenden Substrat. Das Substrat kann aus Metall, Holz, Kunststoff, Glas, Keramik oder Papier bestehen oder diese Stoffe als Verbunde enthalten. Vorzugsweise handelt es sich um Automobilkarosserieteile oder industrielle Bauteile, inclusive Container, aus Metall oder um Möbel.

Das Substrat kann mit einer Grundierung versehen sein. Im Falle von Kunststoffen handelt es sich um eine sog. Hydrogrundierung, welche vor der Applikation des erfindungsgemäßen Beschichtungsstoffs, insbesondere des Wasserbasislacks oder des Klarlacks, ausgehärtet wird. Im Falle von Metallen, insbesondere Automobilkarosserieteilen, handelt es sich um übliche und bekannte ausgehärtete Elektrotauchlacke, auf die ein Füller appliziert und eingebrannt wird.

Demnach ist die erfindungsgemäße Pulverklarlack-Slurry und das erfindungsgemäße Verfahren auch für Anwendungen außerhalb der Automobillackierung geeignet, insbesondere für die Lackierung von Möbeln und die industrielle Lackierung, inklusive Coil Coating und Container Coating. Insbesondere ist die erfindungsgemäße Pulverklarlack-Slurry als Überzug von Basislacken geeignet, vorzugsweise in der Automobilindustrie. Besonders geeignet ist sie als ein- oder mehrschichtige Klarlackbeschichtung über Wasserbasislacke auf Basis von Polyestern, Polyurethanharzen und Aminoplastharzen, wie sie in den Patentschriften EP-B-0 089 497 oder EP-A-0 522 420 beschrieben werden.

Vorteilhafterweise wird die erfindungsgemäße Pulverklarlack-Slurry und das erfindungsgemäße Verfahren im Rahmen des bei der Automobilerstlackierung angewandten Naß-in-naß-Verfahrens erfolgen, was ein weiterer Vorteil der erfindungsmemäßen Pulverklarlack-Slurry ist.

Die Applikation nach dem Naß-in-naß-Verfahren umfaßt die folgenden Arbeitsschritte:
(I) Applikation einer Basislackschicht, insbesonderte einer Wasserbasislackschicht, auf einem grundierten oder ungrundierten Substrat,
(II) Ablüften und Zwischentrocknen der resultierenden Basislackschicht,
(III) Applikation einer Klarlackschicht auf der Basislackschicht, insbesondere Wasserbasislackschicht, und
(IV) thermische Härtung sowie ggf. Härtung mit aktinischem Licht der beiden Naßschichten.

Die bei dem erfindungsgemäßen Verfahren verwendete erfindungsgemäße Pulverklarlack-Sluny ist thermisch und/oder mit aktinischer Strahlung härtbar.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Üblicherweise wird dies von der Fachwelt als Fremdvernetzung bezeichnet. Sind die Vernetzungsmittel in die Bindemittel bereits eingebaut, spricht man auch von Selbstvernetzung. Erfindungsgemäß ist die Fremdvernetzung von Vorteil und wird deshalb bevorzugt angewandt.

Im Rahmen der vorliegenden Erfindung ist unter aktinischer Strahlung Elektronenstrahlung oder vorzugsweise UV-Strahlung zu verstehen. Die Härtung durch UV-Strahlung wird üblicherweise durch radikalische oder kationische Photoinitiatoren initiiert.

Werden die thermische und die Härtung mit aktinischem Licht bei einem Beschichtungsstoff gemeinsam angewandt, spricht man auch von "Dual Cure". Für die Härtung können die üblichen und bekannten Methoden wie Erhitzen in einem Umluftofen oder mit IR-Lampen sowie ggf. Bestrahlen mit UV-Lampen angewandt werden.

Die erfindungsgemäße Pulverklarlack-Slurry kann die in den Patentschriften DE 196 13 547, DE 197 41 555.5 und DE 197 44 561.1 beschriebene Zusammensetzung haben, nur daß sie zusätzlich die erfindungsgemäß zu verwendenden Säuren enthält.

Besonders vorteilhafte erfindungsgemäße Pulverklarlack-Slurries enthalten:
a) mindestens ein epoxidhaltiges Bindemittel mit einem Gehalt von, bezogen auf das Bindemittel, 0,5 bis 40 Gew.-% an einpolymerisierten glycidylgruppenhaltigen Monomeren und
b) mindestens ein Tris(alkoxycarbonylamino)triazin und mindestens eine Polycarbonsäure, insbesondere eine geradkettige Dicarbonsäure, und/oder einen carboxyfunktionellen Polyester als Vernetzungsmittel
oder alternativ
a) mindestens ein Tris(alkoxycarbonylamino)triazin und mindestens ein oligomeres oder polymeres epoxidhaltiges Vernetzungsmittel mit einem Gehalt von, bezogen auf das Vernetzungsmittel, 0,5 bis 40 Gew.-% an einpolymerisierten glycidylgruppenhaltigen Monomeren und/oder ein niedermolekulares epoxidhaltiges Vernetzungsmittel und
b) mindestens ein Carboxylgruppen enthaltendes Polymer als Bindemittel und bei beiden Varianten
c) mindestens eine der vorstehend beschriebenen polyvalenten anorganischen Säuren oder Oxalsäure sowie
d) ggf. mindestens ein Polyol,
   und / oder
e) ggf. Bestandteile, die die Härtung mit aktinischem Licht ermöglichen.

Die Zusammensetzung der erfindungsgemäßen Pulverslurry kann breit variieren und dem jeweiligen Verwendungszweck optimal angepaßt werden. Erfindungsgemäß ist es von Vorteil, wenn die erfindungsgemäße Pulverklarlack-Slurry, bezogen auf den jeweiligen Festkörper, die Bestandteile a), b) und c) sowie ggf. d) und/oder e) in den folgenden Mengen:
a) 40 bis 85, bevorzugt 50 bis 80, besonders bevorzugt 55 bis 75 Gew.-%,
b) 10 bis 30, bevorzugt 12 bis 25, besonders bevorzugt 15 bis 23 Gew.-%,
c) 0,1 bis 2000 ppm, bevorzugt 1 bis 1500, besonders bevorzugt 100 bis 1200, insbesondere 800 bis 1100 ppm sowie
d) 0 bis 30 Gew.-% und
e) 0 bis 40 Gew.-%
enthält.

Als epoxyfunktionelles Bindemittel a) für die erfindungsgemäße Pulverklarlack-Slurry sind beispielsweise epoxidgruppenhaltige Polyacrylatharze geeignet, welche durch Copolymerisation von mindestens einem ethylenisch ungesättigten Monomer, das mindestens eine Epoxidgruppe in Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind beispielsweise aus den Patentschriften EP-A-0 299 420, DE-B-22 14 650, DE-B-27 49 576, US-A-4,091,048 oder US-A-3,781,379 bekannt.

Beispiele geeigneter Monomere, welche keine Epoxidgruppe im Molekül enthalten, sind Alkylester der Acryl- und Methacrylsäure, insbesondere Methylacrylat, Methylmethacrylat, Ethylacrylat, Ethylmethacrylat, n-Butylacrylat, n-Butylmethacrylat, sekundär-Butylacrylat, sekundär-Butylmethacrylat, tert.-Butylacrylat, tert.-Butylmethacrylat, Neopentylacrylat, Neopentylmethacrylat, 2-Ethylhexylacrylat oder 2-Ethylhexylmethacrylat; Amide der Acrylsäure und Methacrylsäure, insbesondere Acrylamid und Methacrylsäureamid; vinylaromatische Verbindungen, insbesondere Styrol, Methylstyrol oder Vinyltoluol; die Nitrile der Acrylsäure und Methacrylsäure; Vinyl- und Vinylidenhalogenide, insbesondere Vinylchlorid oder Vinylidenfluorid; Vinylester, insbesondere Vinylacetat und Vinylpropionat; Vinylether, insbesondere n-Butylvinylether; oder hydroxylgruppenhaltige Monomere, insbesondere Hydroxyethylacrylat, Hydroxyethylmethacrylat, Hydroxypropylacrylat, Hydroxypropylmethacrylat, 4-Hydroxybutylacrylat oder 4-Hydroxybutylmethacrylat.

Beispiele geeigneter epoxyfunktioneller Monomerer sind Glycidylacrylat, Glycidylmethacrylat oder Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht Mn (gelpermeationschromatographisch unter Verwendung eines Polystyrolstandards bestimmt) von 2000 bis 20000, vorzugsweise 3000 bis 10000, und eine Glasübergangstemperatur Tg von 30 bis 80, vorzugsweise 40 bis 70, besonders bevorzugt 40 bis 60 und insbesondere 48 bis 52 °C (gemessen mit Hilfe der Differential Scanning Calorimetry (DSC)) auf.

Die Herstellung des epoxidgruppenhaltigen Polyacrylatharzes weist keine Besonderheiten auf, sondern erfolgt nach den üblichen und bekannten Polymerisationsmethoden.
Ein weiterer wesentlicher Bestandteil der erfindungsgemäßen Pulverlack-Slurry ist das Vernetzungsmittel b).

Vorteilhafterweise werden mindestens zwei unterschiedliche Vernetzungsmittel b₁) oder b₂) angewandt.

Hierbei handelt es sich bei dem ersten Vernetzungsmittel b₁) um Tris(alkoxycarbonylamino)triazine und deren Derivate. Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxi-, Tris(butoxi- und/oder Tris(2-ethylhexoxicarbonylamino)triazine verwendet.

Bevorzugt sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen.

Die Tris(alkoxycarbonylamino)triazine und deren Derivate können auch im Gemisch mit herkömmlichen Vernetzungsmitteln verwendet werden. Hierfür kommen vor allem Polyisocyanate in Betracht, welche von den Tris(alkoxycarbonylamino)triazinen verschieden sind. Ebenso sind Aminoplastharze, beispielsweise Melaminharze, verwendbar. Hierbei kann jedes für transparente Decklacke oder Klarlacke geeignete Aminoplastharz oder eine Mischung aus solchen Aminoplastharzen verwendet werden.

Derartige Harze sind dem Fachmann gut bekannt und werden von zahlreichen Firmen als Verkaufsprodukte angeboten.

Bei dem zweiten Vernetzungsmittel b₂) handelt es sich um Carbonsäuren, insbesondere gesättigte, geradkettige, aliphatische Dicarbonsäuren mit 3 bis 20 Kohlenstoffatomen im Molekül. An ihrer Stelle oder zusätzlich zu ihnen können auch carboxyfunkrionelle Polyester verwendet werden. Ganz besonders bevorzugt wird Decan-1,10-dicarbonsäure (Dodecandisäure) verwendet.

Um die Eigenschaften der erfindungsgemäßen Pulverklarlack-Slurries zu modifizieren, können noch andere Carboxylgruppen enthaltende Vernetzungsmittel in untergeordneten Mengen verwendet werden. Beispiele geeigneter zusätzlicher Vernetzungsmittel dieser Art sind gesättigte verzweigte oder ungesättigte geradkettige Di- und Polycarbonsäuren sowie die nachstehend als Bindemittel b) im Detail beschriebenen Polymere mit Carboxylgruppen.

Es können die erfindungsgemäßen Pulverklarlack-Slurries in einer zweiten Variante ein epoxyfunktionelles Vernetzungsmittel a) und ein Carboxylgruppen enthaltendes Bindemittel b) enthalten.

Beispiele geeigneter Carboxylgruppen enthaltender Bindemittel b) sind beispielsweise Polyacrylatharze, welche durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppen im Molekül enthält, hergestellt werden.

Beispiele geeigneter oligomerer und polymerer epoxyfunktioneller Vernetzungsmittel a) sind die vorstehend beschriebenen epoxidgruppenhaltigen Bindemittel a).

Beispiele geeigneter niedermolekularer epoxyfunktioneller Vernetzungsmittel a) sind niedermolekulare, mindestens zwei Glycidylgruppen enthaltende Verbindungen, insbesondere Pentaerythrit-tetraglycidylether oder Triglycidylisocyanurat.

Das epoxidgruppenhaltige Bindemittel a) und das Carboxylgruppen enthaltende Vernetzungsmittel b) der ersten erfindungsgemäßen Variante bzw. das Carboxylgruppen enthaltende Bindemittel b) und das epoxyfunktionelle Vernetzungsmittel a) der zweiten erfindungsgemäßen Variante werden im allgemeinen in einem solchen Verhältnis eingesetzt, daß pro Äquivalent Epoxidgruppen 0,5 bis 1,5, vorzugsweise 0,75 bis 1,25 Äquivalente Carboxylgruppen vorliegen. Die Menge der vorliegenden Carboxylgruppen kann in einfacher Weise durch Titration mit einer alkoholischen KOH-Lösung ermittelt werden.

Das epoxyfunktionelle Bindemittel a) oder das oligomere oder polymere epoxyfunktionelle Vernetzungsmittel a) enthält vinylaromatische Verbindungen wie Styrol einpolymerisiert. Um die Gefahr der Rißbildung bei der Bewitterung zu begrenzen, liegt der Gehalt indes nicht über 35 Gew.-%, bezogen auf das Bindemittel a) oder das Vernetzungsmittel a). Bevorzugt werden 10 bis 25 Gew.-% einpolymerisiert.

Die erfindungsgemäße Pulverklarlack-Slurry kann Polyole d) enthalten.

Als Polyole d) kommen alle niedermolekularen Verbindungen, Oligomere und Polymere in Betracht, welche mindestens zwei, vorzugsweise mindestens drei primäre und/oder sekundäre Hydroxylgruppen aufweisen und den festen Zustand des erfindungsgemäßen Pulverlacks und der erfindungsgemäßen Slurry nicht zerstören.

Beispiele geeigneter Oligomere und Polymere d) sind lineare und/oder verzweigte und/oder blockartig, kammartig und/oder statistisch aufgebaute Poly(meth)acrylate, Polyester, Polyurethane, acrylierte Polyurethane, acrylierte Polyester, Polylactone, Polycarbonate, Polyether, (Meth)Acrylatdiole, Polyharnstoffe oder oligomere Polyole, welche als Reaktivverdünner für die thermische Härtung fungieren.

Werden diese Oligomere und Polymere als Polyole d) verwendet, enthalten sie vorzugsweise keine Carboxylgruppen.

Beispiele geeigneter Reaktiverdünner d) für die thermische Härtung sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl von 200 bis 450, ein zahlenmittleres Molekulargewicht Mn von 400 bis 1000 und ein massenmittleres Molekulargewicht Mw von 600 bis 1100 auf;

Weitere Beispiele geeigneter Polyole d) sind verzweigte, cyclische und/oder acyclische C₉-C₁₆-Alkane, die mit mindestens zwei Hydroxylgruppen funktionalisiert sind, insbesondere Diethyloctandiole.

Weitere Beispiele zu verwendender Polyole d) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Diese Polyole d) sind dem Fachmann bekannt, und zahlreiche geeignete Verbindungen sind am Markt erhältlich.

Die erfindungsgemäße Pulverklarlack-Slurry kann als Komponente e) Bestandteile für die Härtung mit aktinischer Strahlung enthalten.

Als Bestandteile e) kommen grundsätzlich alle mit aktinischem Licht und/oder Elektronenstrahlung härtbaren niedermolekularen, oligomeren und polymeren Verbindungen in Betracht, wie sie üblicherweise auf dem Gebiet der UVhärtbaren oder mit Elektronenstrahlung härtbaren Beschichtungsmittel verwendet werden. Diese strahlenhärtbaren Beschichtungsmittel enthalten üblicherweise mindestens ein, bevorzugt mehrere strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren.

Vorteilhafterweise werden die strahlenhärtbaren Bindemittel als Bestandteile e) verwendet. Beispiele geeigneter strahlenhärtbarer Bindemittel e) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel e) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Weitere Beispiele geeigneter Bestandteile e) sind strahlenhärtbare Reaktivverdünner wie niedermolekulare polyfunktionelle ethylenisch ungesättigte Verbindungen. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Beispiele geeigneter Photoinitiatoren e) sind Photoinitiatoren vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten, oder kationische Photoinitiatoren. Beispielhaft sei hier auf Römpp Chemie Lexikon, 9. erweiterte und neubearbeitete Auflage, Georg Thieme Verlag Stuttgart, Bd. 4, 1991, oder Römpp Lexikon Lacke und Druckfarben, Georg Thieme Verlag Stuttgart, New York, 1998, Seiten 444 bis 446, verwiesen.

Wenn die erfindungsgemäße Pulverklarlack-Slurry nur mit aktinischer Strahlung härtbar ist, enthält sie vorzugsweise nur diese Bestandteile e).

Die erfindungsgemäße Pulverklarlack-Slurry kann des weiteren übliche und bekannte Lackadditive f), wie sie in Klarlacken üblicherweise verwendet werden, in wirksamen Mengen enthalten. Beispiele geeigneter Lackadditive f) sind
- UV-Absorber;
- Radikalfänger;
- Katalysatoren für die Vernetzung;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufmittel;
- filmbildende Hilfsmittel wie Cellulose-Derivate;
- Flammschutzmittel; oder
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate; oder

Weitere Beispiele geeigneter Lackadditive werden in dem Lehrbuch "Lackadditive" von Johan Bieleman, Wiley-VCH, Weinheim, New York, 1998, beschrieben.

### Beispiele und Vergleichsversuch

### Beispiel 1: Herstellung des Acrylatharzes

21,1 Teile Xylol wurden vorgelegt und auf 130°C erwärmt. Zu der Vorlage wurden bei 130°C binnen 4 Stunden über zwei getrennte Zulaufbehälter der Initiator, bestehend aus 4,5 Teilen TBPEH (tert.-Butylperethylhexanoat) und 4,86 Teilen Xylol, und die Monomerenmischung, bestehend aus 10,78 Teilen Methylmethacrylat, 25,5 Teilen n-Butylmethacrylat, 17,39 Teilen Styrol und 23,95 Teilen Glycidylmethacrylat, zudosiert. Anschließend wurde auf 180°C erwärmt und im Vakuum bei < 100 mbar das Lösemittel abgezogen.

### Beispiel 2: Pulverlack für spätere Verwendung in der Pulverklarlack-Slurry

73,5 Teile Acrylatharz gemäß Beispiel 1, 17,8 Teile Dodecandicarbonsäure, 0,5 Teile Tris-(alkoxycarbonylamino)-triazin, 2 Teile Tinuvin 1130 (UV-Absorber), 0,9 Teile Tinuvin 144 (HALS) und 0,4 Teile Additol XL 490 (Verlaufsmittel) wurden innig in einem Henschel-Fluidmischer vermischt, auf einem BUSS PLK 46 Extruder extrudiert, auf einer Hosokawa ACM 2-Mühle vermahlen und über ein 125 um Sieb ausgesiebt.

### Vergleichsversuch V1: Herstellung einer Pulverklarlack-Slurry

In 400 Teile entsalztes Wasser wurden 0,6 Teile Troykyd D777 (Entschäumer), 0,6 Teile Orotan 731 K (Dispergierhilfsmittel), 0,06 Teile Surfynol TMN 6 (Netzmittel) und 16,5 Teile RM8 (Rohm & Haas, nichtionischer Assoziativ-Verdicker auf Polyurethanbasis) dispergiert. Dann wurden in kleinen Portionen 94 Teile Pulverlack aus Beispiel 2 eingerührt. Anschließend wurden noch einmal 0,6 Teile Troykyd D777, 0,6 Teile Orotan 731 K, 0,06 Teile Surfynol TMN 6 und 16,5 Teile RM8 eindispergiert. Abschließend wurden in kleinen Portionen 94 Teile des Pulverklarlacks eingerührt. Das Material wurde in einer Sandmühle während 3,5 Stunden gemahlen. Die abschließend gemessene durchschnittliche Teilchengröße beträgt 4 µm. Das Material wurde durch einen 50 µm Filter filtriert, und abschließend wurden 0,05 % Byk 345 (Verlaufsmittel) zugesetzt.

### Beispiel 3: Herstellung der erfindungsgemäßen Pulverklarlack-Slurry unter Verwendung von Phosphorsäure

Der Pulverklarlack-Slurry aus dem Vergleichsversuch V1 wurden 1000 ppm Phosphorsäure als 10%-ige wäßrige Lösung zugesetzt.

### Beispiel 4 / Vergleichsversuch V2: Applikation der Pulverklarlack-Slurries

Die Pulverklarlack-Slurries gemäß Beispiel 3 (Beispiel 4) und des Vergleichsversuchs V1 (Vergleichsversuch V2) wurden auf mit handelsüblichem Elektrotauchlack und weißpigmentiertem Wasserbasislack beschichteten Stahltafeln mit einer Becherpistole appliziert. Das Blech wurde 5 min bei Raumtemperatur und 5 min bei 60°C abgelüftet. Anschließend wurde bei einer Temperatur von 145°C während 30 min eingebrannt.

### Beispiel 5: Applikation eines Vergleichslacks für die Prüfung der Vergilbung

Als Vergleichsstandard für die nachfolgende Vergilbungsuntersuchung wurde auf einer gemäß Beispiel 4 identisch vorbeschichteten Stahltafel anstelle der Pulverklarlack-Slurries ein handelsüblicher Zweikomponentenklarlack ("2K"; FF95-0111, Fa. BASF Coatings AG) mittels elektrostatischer Spritzpistole appliziert. Diese Tafel wurde anschließend bei einer Temperatur von 140°C während 30 min eingebrannt.

### Beispiel 6: Prüfung der Vergilbung der Pulverklarlack-Slurries

Von den nach Beispiel 4 präparierten Proben gemäß Beispiel 4 und Vergleichsversuch V2 sowie von dem nach Beispiel 5 applizierten Vergleichslack wurde der Gelbwert (GW) nach DIN 6127 bestimmt. Die Differenz des Gelbwerts der Proben gemäß Beispiel 4 und Vergleichsversuch V2 (G_{Probe}) zum Gelbwert des Vergleichstandards (2K; aus Beispiel 5; GW_{2K}) wurde im nachfolgenden als Gelbwertdifferenz ("Delta-GW") bezeichnet (Delta-GW=GW_{Probe}-GW_{2K}). Je höher dieser Wert ist, desto stärker ist die Vergilbung und der Unterschied zu dem erfahrungsgemäß sehr wenig vergilbenden 2K-Klarlack.

**Tabelle 1:**

| Delta-GW der Pulverklarlack-Slurries gemäß Beispiel 4 und Vergleichsversuch V2 im Vergleich zum 2K-Lack | |
|---|---|
| **Probe** | **Delta-GW** |
| Vergleichsversuch V2 | 13,4 |
| Beispiel 4 | 1,9 |

Wie aus Tabelle 1 ersichtlich, sinkt der ursprünglich sehr hohe Delta-GW von 13,4 durch den Einfluß der Phosphorsäure auf 1,9 ab.

### Beispiel 7: Einfluß des Zusatzes von Phosphorsäure zu den Wasserbasislacken 1 und 2

Beispiel 4 wurde wiederholt, nur daß dem Wasserbasislack einmal 10 ppm Phosphorsäure (Beispiel 7-1) und einmal 20 ppm Phosphorsäure (Beispiel 7-2) jeweils als 10%-ige wäßrige Lösung zugesetzt wurden. Es resultierte eine weitere, wenn auch geringfügige Absenkung des Gelbwertes.

## Patentansprüche

1. Verfahren zur Herstellung von ein- oder mehrschichtigen Klarlackbeschichtungen auf einem grundierten oder ungrundierten Substrat durch Applikation mindestens einer Pulverlack-Dispersion, insbesondere einer Pulverklarlack-Slurry, auf diesem Substrat und anschließender thermischer Härtung und/oder Härtung mit aktinischer Strahlung der resultierenden Schicht(en), **dadurch gekennzeichnet, daß** mindestens einer Pulverlack-Dispersion, insbesondere einer Pulverklarlack-Slurry, mindestens eine polyvalente anorganische Säure und / oder Oxalsäure zugesetzt wird oder werden.

2. Verfahren nach Anspruch 1, **dadurch gekennzeichnet, daß** Phosphorsäure oder ihre Derivate, Schwefelsäure oder Borsäure, insbesondere Phosphorsäure oder ihre Derivate, zugesetzt werden.

3. Verfahren nach Anspruch 1 oder 2, **dadurch gekennzeichnet, daß** Phosphorsäure zugesetzt wird.

4. Verfahren nach einem der Ansprüche 1 bis 3, **dadurch gekennzeichnet, daß** als Grundierung mindestens eine Basislackschicht, insbesondere eine Wasserbasislackschicht, verwendet wird.

5. Verfahren nach Anspruch 4, **dadurch gekennzeichnet, daß** mindestens einer Basislackschicht eine polyvalente anorganische Säure und / oder Oxalsäure zugesetzt werden.

6. Pulverlack-Dispersion, insbesondere Pulverklarlack-Slurry, enthaltend mindestens eine polyvalente anorganische Säure und / oder Oxalsäure.

7. Pulverlack-Dispersion nach Anspruch 6, enthaltend Phosphorsäure oder ihre Derivate, Schwefelsäure oder Borsäure, insbesondere Phosphorsäure oder ihre Derivate.

8. Pulverlack-Dispersion nach Anspruch 6 oder 7, enthaltend Phosphorsäure.

9. Verwendung von polyvalenten anorganischen Säuren und / oder Oxalsäure, insbesondere Phosphorsäure, zur Verhinderung der Vergilbung von mit Hilfe von Pulverlack-Dispersionen, insbesondere Pulverklarlack-Slurries hergestellten Beschichtungen.

10. Beschichtete Artikel enthaltend eine Beschichtung, herstellbar aus einer Pulverlack-Dispersion, insbesondere Pulverklarlack-Slurry, gemäß einem der Ansprüche 6 bis 8 und/oder gemäß dem Verfahren gemäß einem der Ansprüche 1 bis 5.

## Claims

1. A process for producing single-coat or multicoat clearcoat finishes on primed or unprimed substrates by applying at least one powder coating dispersion, in particular a powder clearcoat slurry, to the substrate and then curing the resulting film(s) thermally and/or with actinic radiation, **characterized in that** at least one polyvalent inorganic acid and/or oxalic acid are or is added to at least one powder coating dispersion, in particular to a powder clearcoat slurry.

2. The process as claimed in claim 1, **characterized in that** phosphoric acid or its derivatives, sulfuric acid or boric acid, especially phosphoric acid or its derivatives, are added.

3. The process as claimed in claim 1 or 2, **characterized in that** phosphoric acid is added.

4. The process as claimed in one of claims 1 to 3, **characterized in that** at least one basecoat film, in particular an aqueous basecoat film, is used as primer.

5. The process as claimed in claim 4, **characterized in that** a polyvalent inorganic acid and/or oxalic acid are added to at least one basecoat film.

6. A powder coating dispersion, in particular powder clearcoat slurry, comprising at least one polyvalent inorganic acid and/or oxalic acid.

7. The powder coating dispersion as claimed in. claim 6, comprising phosphoric acid or its derivatives, sulfuric acid or boric acid, especially phosphoric acid or its derivatives.

8. The powder coating dispersion as claimed in claim 6 or 7, comprising phosphoric acid.

9. The use of polyvalent inorganic acids and/or oxalic acid, especially phosphoric acids, to prevent the yellowing of coatings produced using powder coating dispersions, especially powder clearcoat slurries.

10. Coated articles comprising a coating producible from a powder coating dispersion, especially powder clearcoat slurry, as claimed in one of claims 6 to 8 and/or by the process as claimed in one of claims 1 to 5.

## Revendications

1. Procédé pour la production de revêtements de vernis mono- ou multicouches sur un subjectile revêtu ou non d'un primaire, par application sur ce subjectile d'au moins une dispersion de peinture en poudre, en particulier d'une dispersion de vernis en poudre, et durcissement thermique subséquent et/ou durcissement subséquent avec un rayonnement actinique de la (des) couche(s) résultante(s), **caractérisé en ce qu'**au moins un acide minéral polyvalent et/ou de l'acide oxalique est ou sont ajoutés à au moins une dispersion de vernis en poudre, en particulier à une dispersion de vernis en poudre.

2. Procédé selon la revendication 1, **caractérisé en ce qu'**on ajoute de l'acide phosphorique ou ses dérivés, de l'acide sulfurique ou de l'acide borique, en particulier de l'acide phosphorique ou ses dérivés.

3. Procédé selon la revendication 1 ou 2, **caractérisé en ce qu'**on ajoute de l'acide phosphorique.

4. Procédé selon l'une quelconque des revendications 1 à 3, **caractérisé en ce qu'**on utilise comme primaire au moins une couche de peinture de base, en particulier une couche de peinture de base à l'eau.

5. Procédé selon la revendication 4, **caractérisé en ce qu'**on ajoute à au moins une couche de peinture de base un acide minéral polyvalent et/ou de l'acide oxalique.

6. Dispersion de peinture en poudre, en particulier dispersion de vernis en poudre, contenant au moins un acide minéral polyvalent et/ou de l'acide oxalique.

7. Dispersion de peinture en poudre selon la revendication 6, contenant de l'acide phosphorique ou ses dérivés, de l'acide sulfurique ou de l'acide borique, en particulier de l'acide phosphorique ou ses dérivés.

8. Dispersion de peinture en poudre selon la revendication 6 ou 7, contenant de l'acide phosphorique.

9. Utilisation d'acides minéraux polyvalents et/ou d'acide oxalique, en particulier d'acide phosphorique, pour empêcher le jaunissement de revêtements produits à l'aide de dispersions de peinture en poudre, en particulier de dispersions de vernis en poudre.

10. Article revêtu comportant un revêtement, pouvant être produit à partir d'une dispersion de peinture en poudre, en particulier d'une dispersion de vernis en poudre, selon l'une quelconque des revendications 6 à 8 et/ou selon le procédé conforme à l'une des revendications 1 à 5.
